# EUROPÄISCHE PATENTANMELDUNG

(11) **EP 1 688 970 A1**
(43) Veröffentlichungstag der Anmeldung: **09.08.2006**
(21) Anmeldenummer: 06001392.7
(22) Anmeldetag: 24.01.2006
(51) Int. Cl.: H01C 10/32, G01F 23/36

(54) **Potentiometer**

(30) Priorität: 07.02.2005 DE 102005005752
(71) Anmelder: Bourns, Inc., Riverside, California 92507 (US)
(72) Erfinder: Ebnet, Hans-Peter, 82041 Oberhaching (DE)
(74) Vertreter: von Bülow, Tam

(57) **Zusammenfassung**

Das Potentiometer hat eine Schleiferbahn (1), die durch eine Vielzahl von elektrisch leitfähigen Stegen (2) gebildet ist. Zwischen benachbarten Stegen ist ein Abstand (3) vorhanden. An einer beweglichen Schleiferfeder (4) ist mindestens ein, vorzugsweise zwei Abgriffkontakte (7, 8; 14, 15) pro Schleiferbahn (1, 11) befestigt. Jeder Abgriffkontakt (7, 8; 14, 15) ist ein zylindrischer Körper, dessen Länge (LA) und Anordnung an die Breite (BS) der Stege (2) sowie die Breite (BL) der Abstände (3) so angepaßt sind, daß in jeder Position der Schleiferfeder mindestens ein Abgriffkontakt (7, 8) in elektrischen Kontakt mit mindestens einem Steg ist. Die Anordnung der Abgriffkontakte (7, 8) erfolgt vorzugsweise unter einem spitzen Winkel (α) gegenüber einer Längsachse (10) der Schleiferfeder. Die Abgriffkontakte sind sowohl in Längsrichtung (25) der Schleiferbahn (1) als auch in radialer Richtung versetzt gegeneinander angeordnet.

## Beschreibung

Die Erfindung bezieht sich auf ein Potentiometer gemäß dem Oberbegriff des Patentanspruches 1.

Ein solches Potentiometer ist aus der DE 29 32 714 A1 bekannt. Dieses Potentiometer, das primär als Tankfüllstandsgeber in Kraftfahrzeugen eingesetzt wird, hat eine Schleiferbahn, die aus einer Vielzahl von versetzt zueinander angeordneten elektrisch leitfähigen Stegen besteht, und eine längs der Schleiferbahn bewegliche Schleiferfeder, die einen Abgriffkontakt aufweist, der längs der Schleiferbahn beweglich ist und dabei die einzelnen Stege kontaktiert. Die Stege sind jeweils an unterschiedlichen Stellen einer Widerstandsbahn angeschlossen, so daß sich ein Abgriff von sich summierenden partiellen Widerständen pro kontaktiertem Steg ergibt. Die Schleiferbahn ist kreisbogenförmig ausgebildet, wobei die Schleiferfeder um eine zur Ebene der Schleiferbahn und damit der Stege senkrechte Achse schwenkbar ist. Bei Verschwenken der Schleiferfeder um diese Achse gleitet der Abgriffkontakt längs der Schleiferbahn.

Als Abgriffkontakt wurde bisher eine kugelkalottenförmige Ausbauchung der Schleiferfeder, ein Nietkopf oder sonstiger Vorsprung an der Schleiferfeder verwendet, der abgesehen von Verformungen oder Abrieb im wesentlichen einen punktförmigen Kontakt zu den Stegen der Schleiferbahn herstellt. Bei Verwendung von nur einem Abgriffkontakt besteht das Problem, daß dieser im Übergangsbereich zwischen zwei benachbarten Stegen der Schleiferbahn keinerlei Kontakt zu einem der Stege hat oder nur schlechten Kontakt zu einem der Stege. Da die Stege normalerweise von einem Trägersubstrat abstehen, ist der Zwischenraum zwischen benachbarten Stegen etwas tiefer liegend, so daß der Abriffkontakt in diesen Zwischenraum einsinkt und anschließend wieder auf den Steg angehoben werden muß, so daß an den Rändern der Stege höherer Verschleiß auftritt, wodurch das Potentiometer eine verkürzte Lebensdauer hat und störanfällig ist.

Aufgabe der Erfindung ist es daher, das Potentiometer der eingangs genannten Art dahingehend zu verbessern, daß es weniger störanfällig ist, eine längere Lebensdauer hat und stets ein einwandfreier elektrischer Kontakt zwischen Abgriffkontakt und Stegen der Schleiferbahn sichergestellt ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt darin, an der Schleiferfeder mindestens einen, vorzugsweise zwei oder auch mehrere zylindrische Abgriffkontakte anzubringen, deren Länge und Anordnung so an die Breite der Stege und die Breite der Abstände angepaßt sind, daß in jeder Position der Schleiferfeder mindestens ein Abgriffkontakt in elektrischen Kontakt mit mindestens einem Stege steht. Zwischen den Abgriffkontakten und der Schleiferbahn besteht somit eine Linienberührung.

Vorzugsweise ist die Anordnung des Abgriffkontaktes bzw. der Abgriffkontakte unter einem spitzen Winkel gegenüber der Längsachse der Schleiferfeder vorgenommen, so daß der Abgriffkontakt in Längsrichtung der Schleiferbahn, also in Bewegungsrichtung der Schleiferfeder, einen verbreiterten Abgriffbereich oder Überdeckungsbereich hat. Der Winkel liegt in der Größenordnung zwischen 5° und 15° und beträgt vorzugsweise 12°.

Bei Verwendung von zwei Abgriffkontakten pro Schleiferbahn sind diese versetzt gegeneinander angeordnet. Der Versatz ist dabei in zweierlei Richtungen vorgesehen, nämlich in Längsrichtung der Schleiferbahn und in Richtung einer gemeinsamen Längsachse der Abgriffkontakte.

Der Versatz zweier Abgriffkontakte in Längsrichtung der Schleiferbahn ist größer als der Abstand zwischen zwei benachbarten Stegen, jedoch kleiner als die Summe eines Abstandes zwischen zwei benachbarten Stegen plus der Breite eines Steges. Damit ist sichergestellt, daß jederzeit mindestens ein Abgriffkontakt mindestens einen Steg kontaktiert.

Die Abgriffkontakte können gerade oder schräg verlaufende Stirnseiten haben, so daß sie entweder unter einem Winkel zur Kante von Federarmen, an denen sie befestigt sind, verlaufen oder parallel zu diesen.

Im folgenden wird die Erfindung anhand von Ausführungsbeispielen im Zusammenhang mit der Zeichnung ausführlicher erläutert. Es zeigt:
- Fig. 1: einen vergrößerten Ausschnitt der Kontaktierungsstellen des Potentiometers nach einem Ausführungsbeispiel der Erfindung;
- Fig. 2: eine Draufsicht einer Schleiferfeder mit Abgriff- kontakten nach einem weiteren Ausführungsbeispiel der Erfindung;
- Fig. 3: eine Seitenansicht der Schleiferfeder der Fig. 2;
- Fig. 4: eine vergrößerte Stirnansicht der Schleiferfeder der Fig. 2;
- Fig. 5: eine schematische Draufsicht auf Schleiferbahnen und Abgriffkontakte bei einer Variante der Anordnung der Abgriffkontakte nach der Erfindung;
- Fig. 6: eine Ansicht ähnlich Fig. 5 mit einer anderen Variante der Anordnung der Abgriffkontakte;
- Fig. 7: einen vergrößerten Ausschnitt einer Draufsicht auf die Schleiferfeder mit Abgriffkontakten nach einer weiteren Variante der Erfindung;
- Fig. 8: eine Draufsicht ähnlich Fig. 7 mit einer anderen Variante der Ausbildung der Abgriffkontakte;
- Fig. 9: eine Draufsicht auf eine Schleiferfeder ähnlich Fig. 1 nach einer Variante der Erfindung; und
- Fig. 10: eine vergrößerte Darstellung von Stegen der Schleiferbahn und Berührungslinien von Abgriffkontakten.

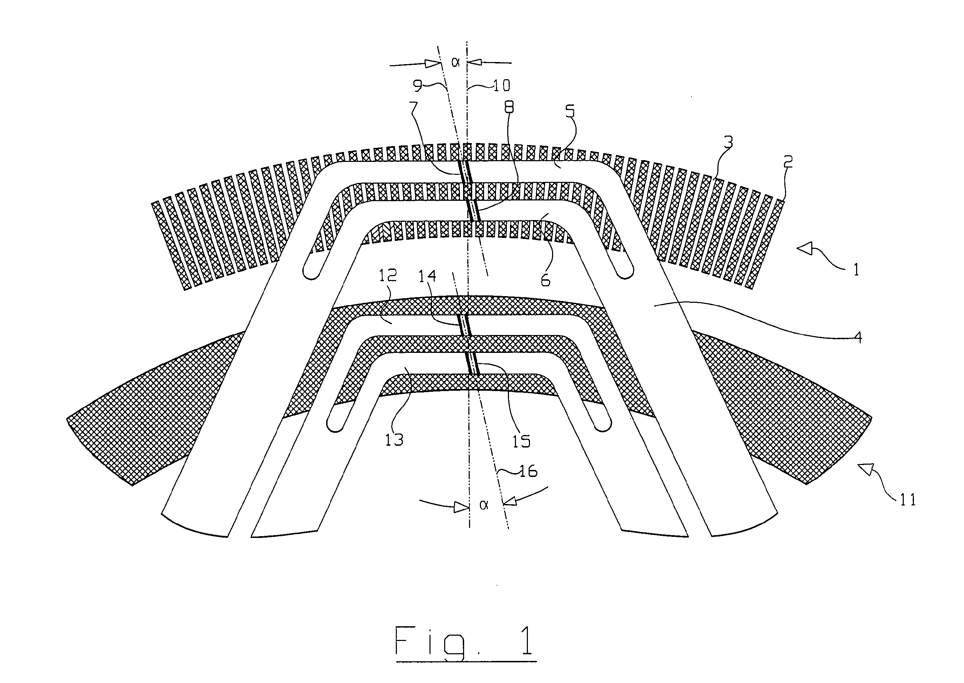

In Fig. 1 ist eine Schleiferbahn 1 gezeigt, die aus einer Vielzahl von radial verlaufenden Stegen 2 aus elektrisch leitfähigem Material gebildet ist, wobei zwischen benachbarten Stegen 2 ein Abstand 3 vorhanden ist. Üblicherweise sind die Stege 2 auf einem nicht dargestellten Trägermaterial bzw. Substrat aufgebracht und stehen somit von diesem etwas ab, so daß die Abstände 3 zwischen den Stegen 2 Vertiefungen bilden. Die Schleiferbahn 1 ist hier insgesamt kreisbogenförmig ausgebildet, wie es bei einem Drehpotentiometer üblich ist. Die einzelnen Stege können mit ihrer Längsachse auf den nicht dargestellten Drehmittelpunkt des Drehpotentiometers ausgerichtet sein. Sie können aber auch parallel zueinanderliegen. Die einzelnen Stege 2 sind in bekannter und deshalb hier nicht dargestellter Weise mit einer Widerstandsbahn verbunden, so daß an jedem einzelnen Steg ein diskreter Widerstandswert abgegriffen werden kann.

Zum elektrischen Abgriff ist eine Schleiferfeder 4 vorgesehen, die in dem die Schleiferbahn 1 überdeckenden Bereich zwei parallele Federarme 5 und 6 aufweist, an denen jeweils ein Abgriffkontakt 7 und 8 angebracht ist. Die Abgriffkontakte sind hier zylinderförmige Drähte, die an die Federarme 5 bzw. 6 angeschweißt oder angelötet sind.

Die beiden zylinderförmigen Abgriffkontakte 7 und 8 sind längs einer gemeinsamen Mittelachse 9 ausgerichtet, die gegenüber einer Mittelachse 10 der Schleiferfeder 4 einen spitzen Winkel α bildet, der beispielsweise 12° beträgt. Damit sind die beiden Abgriffkontakte 7 und 8 sowohl bezüglich der Mittelachse 10 der Schleiferfeder als auch bezüglich der Schleiferbahn 1, d.h. bezüglich der Bewegungsrichtung längs der Schleiferbahn 1 versetzt angeordnet. Dieser Versatz in beiden Richtungen, die Länge der Abgriffkontakte 7 und 8, die Breite der Stege 2 und der Abstände 3 in Bewegungsrichtung längs der Schleiferbahn 1 sind so aufeinander abgestimmt, daß in jeder möglichen Position der Schleiferfeder 4 mindestens einer der beiden Abgriffkontakte 7 oder 8 mindestens einen der Stege 2 kontaktiert. Es kann somit nicht vorkommen, daß beide Abgriffkontakte 7 und 8 sich gerade vollständig in einem der Abstände 3 finden, womit kein Kontakt zu einem der Stege 2 gegeben wäre.

Manche Potentiometer haben eine weitere Schleiferbahn 11, die zur Stromversorgung oder als Mittenabgriff o.ä. dienen. Im hier gezeigten Ausführungsbeispiel ist die weitere Schleiferbahn 11 konzentrisch zur Schleiferbahn 1 angeordnet. Der Federträger 4 hat zusätzliche Federarme 12 und 13, an denen ebenfalls je ein Abgriffkontakt 14 und 15 in gleicher Weise und gleicher Ausbildung und Anordnung befestigt ist, wie die beschriebenen Abgriffkontakte 7 und 8.

Im hier dargestellten Ausführungsbeispiel sind die Paare von Abgriffkontakten 7, 8 und 14, 15 bezüglich der Mittelachse 10 der Schleiferfeder 4 ausgerichtet, so daß die gemeinsame Mittelachse 9 der Abgriffkontakte 7 und 8 und eine gemeinsame Mittelachse 16 der Abgriffkontakte 14 und 15 parallel versetzt zueinander liegen.

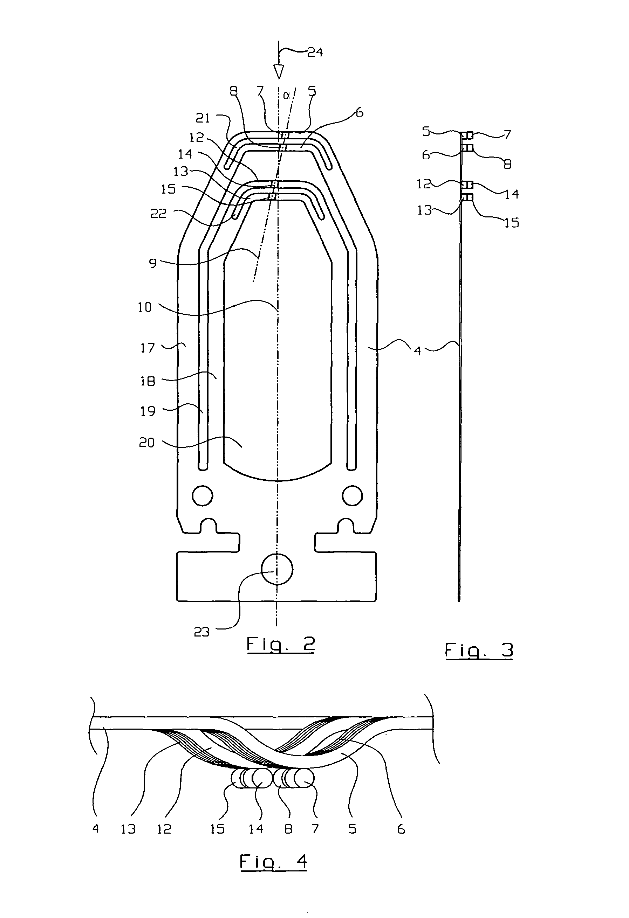

Fig. 2 zeigt eine Draufsicht auf eine vollständige Schleiferfeder 4, die als Stanzteil aus einem Metallblech hergestellt werden kann. Sie hat zwei bügelförmige oder annähernd U-förmige Federarme 17 und 18, die durch eine Aussparung 19 voneinander getrennt sind, wobei der innere Federarm 18 eine relativ großflächige Ausnehmung 20 hat. Die beiden Federarme 17 und 18 sind an einem Restteil der Schleiferfeder 4 miteinander verbunden. Beide Federarme 17 und 18 haben in ihrem mittleren Teil jeweils eine Ausnehmung 21 bzw. 22 zur Bildung der Federarme 5, 6 bzw. 12, 13, wobei an letzteren die Abgriffkontakte 7, 8 bzw. 14, 15 angebracht sind.

Mit Ausnahme der Abgriffkontakte 7, 8, 14, 15 ist die Schleiferfeder 4 spiegelsymmetrisch zu ihrer Längsachse 10 ausgebildet. An dem den Abgriffkontakten gegenüberliegenden Ende der Schleiferfeder ist eine kreisrunde Öffnung 23 vorhanden, mittels der die Schleiferfeder 4 an einer Drehwelle befestigt wird.

Fig. 3 zeigt eine Seitenansicht der Schleiferfeder der Fig. 2. Man erkennt, daß die Schleiferfeder 4 aus einem dünnen Metallblech hergestellt ist. Weiter ist zu sehen, daß die Federarme 5, 6, 12 und 13 im Bereich der Abgriffkontakte 7, 8, 14 und 15 aus der Ebene der Schleiferfeder 4 herausragende Biegungen bzw. Wölbungen haben, an denen die Abgriffkontakte 7, 8, 14 und 15 befestigt sind.

Dies ist noch deutlicher in Fig. 4 zu sehen, die eine stark vergrößerte, abgeschnittene Stirnansicht der Schleiferfeder der Fig. 2, gesehen in Richtung des Pfeiles 24, zeigt. In Fig. 4 ist gut zu erkennen, daß die Federarme 5, 6 und 12, 13 in Richtung zu den Abgriffkontakten 7, 8, 14 und 15 durchgebogen sind, wobei diese Biegungen entsprechend dem im Zusammenhang mit Fig. 1 erwähnten Versatz der Abgriffkontakte ausgebildet sind, so daß der jeweilige Abgriffkontakt 7, 8, 14 bzw. 15 jeweils immer genau in der Mitte der jeweiligen Biegung liegt, um jeweils gleiche Federeigenschaften für jeden der Abgriffkontakte zu schaffen.

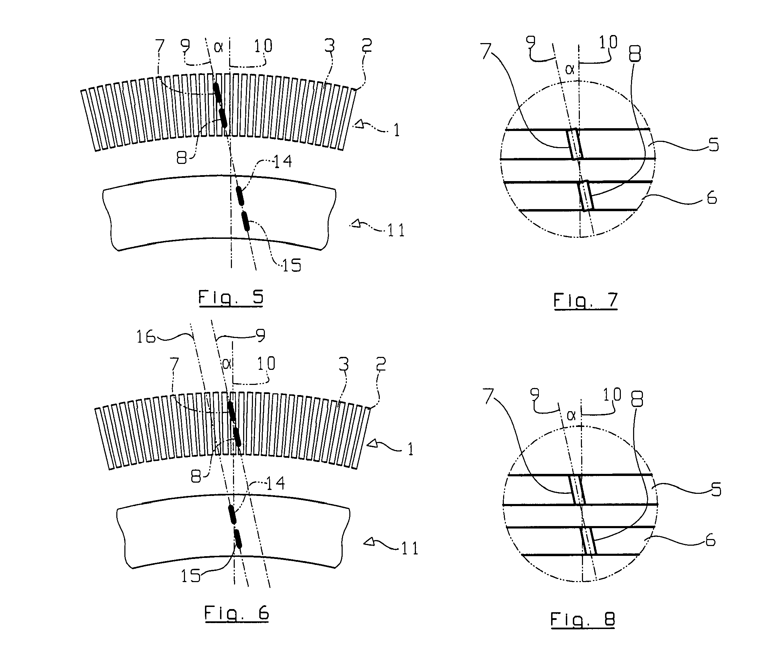

Die Figuren 5 und 6 zeigen zwei Varianten der Anordnung der Abgriffkontakte. Bei der Variante der Fig. 5 sind alle Abgriffkontakte 7, 8, 14 und 15 längs einer einzigen gemeinsamen Achse 9 ausgerichtet, die unter dem Winkel α zur Längsachse 10 der Schleiferfeder 4 steht, wobei die Achse 9 die Längsachse 10 etwa in der Mitte zwischen den beiden Schleiferbahnen 1 und 11 schneidet.

Bei der Variante der Fig. 6 sind die Abgriffkontakte 7 und 8 längs einer ersten Achse 9 ausgerichtet und die Abgriffkontakte 14 und 15 längs einer zweiten Achse 16, wobei die beiden Achsen 9 und 16 parallel versetzt zueinanderliegen und die Längsachse 10 der Schleiferfeder 4 jeweils etwa in der Mitte der Schleiferbahnen 1 und 11 schneiden.

Die Figuren 7 und 8 zeigen eine vergrößerte Draufsicht der Abgriffkontakte 7 und 8. Bei der Variante der Fig. 7 sind die zylinderförmigen Abgriffkontakte 7 und 8 senkrecht zu ihrer Längsachse 9 abgetrennt und bilden mit ihren Stirnseiten einen spitzen Winkel zu den Kanten der Federarme 5 und 6, wobei sie im Ausführungsbeispiel der Fig. 7 etwa mit der Hälfte ihres Durchmessers über die Kanten hinausragen.

Bei der Variante der Fig. 8 sind die zylindrischen Abgriffkontakte 7 und 8 dagegen bündig mit den Kanten der Federarme 5 und 6. Die Stirnseiten der Abgriffkontakte bilden somit zur Längsachse 9 einen Winkel von 90° - α.

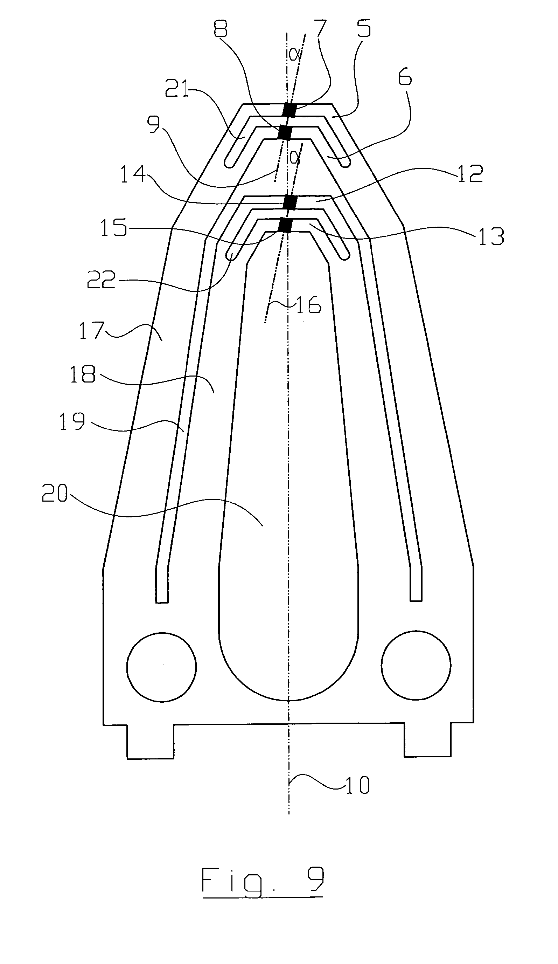

Fig. 9 zeigt eine Draufsicht auf eine Schleiferfeder ähnlich Fig. 2, jedoch mit einer Anordnung der Abgriffkontakte 7, 8, 14 und 15 gemäß den Ausführungsbeispielen der Figuren 6 und 7, wobei darauf hingewiesen wird, daß die Varianten der Figuren 5 und 6 mit denen der Figuren 7 und 8 beliebig kombiniert werden können.

Fig. 9 verdeutlicht auch im Vergleich mit Fig. 2, daß die Federarme beliebig konfiguriert sein können.

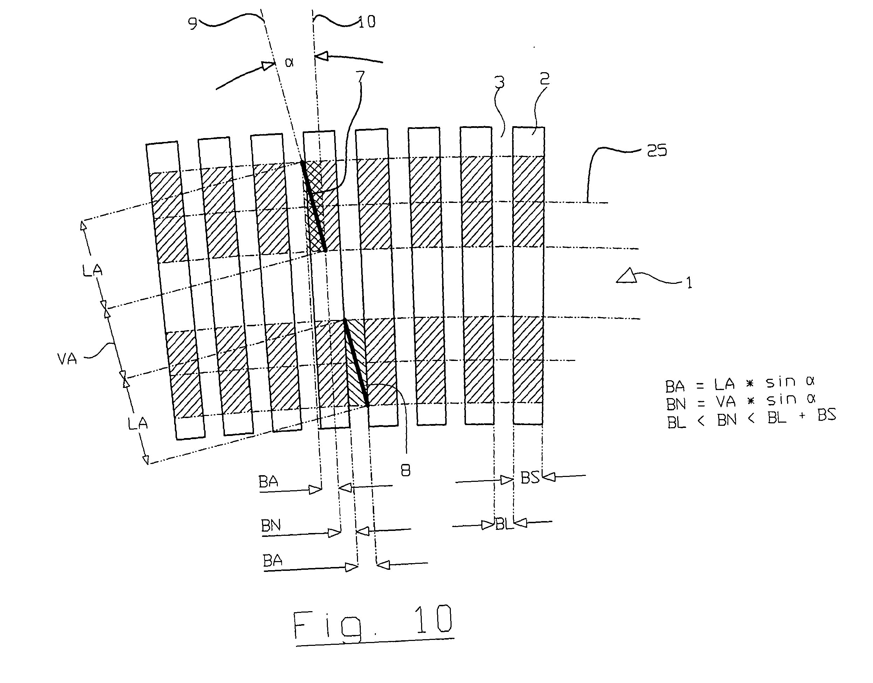

Fig. 10 zeigt einen vergrößerten Ausschnitt eines Teiles der Schleiferbahn 1 und zwei Abgriffkontakte 7 und 8, die zur Andeutung einer Linienberührung mit den Stegen 2 der Schleiferbahn 1 nur als Linie dargestellt sind. Die beiden Abgriffkontakte 7 und 8 haben je eine Länge LA und sind längs der Achse 9 ausgerichtet, die gegenüber der Längsachse 10 der Stege 2 (und der nicht dargestellten Schleiferfeder 4) einen spitzen Winkel α bildet. In Längsrichtung 25 der Schleiferbahn 1 haben die Stege 2 eine Breite BS und die Abstände 3 eine Breite BL. Die Abgriffkontakte 7 und 8 haben demnach eine Abdeckbreite BA, die sich jeweils zu
BA=LA*Sinα
ergibt.

In Fig. 10 sind die Bereiche der Stege 2, die mit den Abgriffkontakten 7 oder 8 in Kontakt kommen können, rechtsschraffiert dargestellt. Der von den Abgriffkontakten 7 oder 8 überdeckte Abgriffbereich ist linksschraffiert dargestellt. In der Stellung der Abgriffkontakte der Fig. 10 fällt der Abgriffkontakt 8 genau in einen Abstand 3 zwischen zwei benachbarten Stegen 2 und hat somit gerade keinen Kontakt mit der Schleiferbahn. Der Abgriffkontakt 7 hat dagegen mit dem größten Teil seines Abdeckbereiches BA Kontakt zu einem Steg 2, nämlich in dem kreuzweise schraffiert dargestellten Bereich.

Bei Verwendung von nur einem Abgriffkontakt auf einer Schleiferbahn 1 erhält man dann mit Sicherheit immer einen Kontakt, wenn die Breite BL der Abstände 3 kleiner ist als die Breite BA der Abdeckung eines Abgriffkontaktes, wenn also BL<LA*Sinα
gilt.

Diese Bedingung ist fertigungstechnisch aufgrund der Genauigkeit des Winkels α, unter dem die zylindrischen Abgriffkontakte an die Schleiferfeder 4 angeschweißt werden, kritisch einzuhalten, wobei zusätzlich aufgrund von kleinen Unebenheiten der Stege 2 oder der Mantelfläche der zylinderförmigen Abgriffkontakte nicht immer eine exakte Linienberührung über die gesamte Länge der Abgriffkontakte stattfindet, sondern teilweise auch nur punktförmige Berührungen.

Aus diesem Grunde ist es bevorzugt, pro Schleiferbahn zwei Abgriffkontakte zu verwenden, die in Längsrichtung der Abgriffkontakte versetzt sind. Man hat dadurch einen Doppelkontakt, was weitaus weniger störanfällig ist. Der Versatz in Längsrichtung der beiden Abgriffkontakte 7 und 8, d.h. in Richtung deren gemeinsamer Achse 9 ist mit VA bezeichnet. Die Breite BN des Versatzes der Abgriffkontakte 7 und 8 in Richtung 25 der Schleiferbahn 1, also des Bereiches, der nicht von den Abgriffkontakten abgedeckt ist, beträgt somit
BN=VA*Sinα.

Damit immer mindestens ein Abgriffkontakt 7 und/oder 8 mit einem Steg 2 in Kontakt ist und nicht beide Abgriffkontakte 7 und 8 je in einen Abstand 3 zwischen zwei Stegen 2 zu liegen kommen, müssen folgende Bedingungen erfüllt sein:

Der Versatz BN in Längsrichtung 25 der Schleiferbahn muß größer sein als der Abstand BL zwischen zwei benachbarten Stegen 2 und der Versatz BN muß kleiner sein als BL plus BS.

Sind diese beiden Bedingungen erfüllt, so ist der Winkel α unkritisch und kann im Extremfall sogar zu Null werden, wenn auch bevorzugt ist, einen von Null verschiedenen Winkel α zu haben, der zusammen mit der Länge LA der Abgriffkontakte so gewählt ist, daß ein Abgriffkontakt maximal zwei benachbart zueinanderliegende Stege berührt. Der Winkel α liegt vorzugsweise in der Größenordnung von 10 ± 5° und besonders bevorzugt in der Größenordnung von 12°.

## Patentansprüche

1. Potentiometer mit einer Schleiferbahn (1), die eine Vielzahl von elektrisch leitfähigen Stegen (2) aufweist, wobei zwischen benachbarten Stegen (2) ein Abstand (3) vorhanden ist, und mit mindestens einem an einer beweglichen Schleiferfeder (4) angebrachten Abgriffkontakt (7, 8),
**dadurch gekennzeichnet,**
**daß** der mindestens eine Abgriffkontakt (7, 8) ein zylindrischer Körper ist, der an der Schleiferfeder (4) befestigt ist, und daß die Länge (LA) und die Anordnung des mindestens einen Abgriffkontaktes (7, 8) sowie die Breite (BS) der Stege (2) und die Breite (BL) der Abstände (3) so aneinander angepaßt sind, daß in jeder Position der Schleiferfeder (4) mindestens ein Abgriffkontakt (7, 8) in elektrischen Kontakt mit mindestens einem Steg (2) ist.

2. Potentiometer nach Anspruch 1, **dadurch gekennzeichnet, daß** die Anordnung des mindestens einen Abgriffkontaktes (7, 8) unter einem spitzen Winkel (α) gegenüber einer Längsachse (10) der Schleiferfeder vorgenommen ist.

3. Potentiometer nach Anspruch 2, **dadurch gekennzeichnet, daß** der Winkel (α) zwischen 5° und 15°, vorzugsweise bei 12° liegt.

4. Potentiometer nach einem der Ansprüche 1 bis 3, **dadurch gekennzeichnet,**
**daß** an der Schleiferfeder (4) mindestens zwei Abgriffkontakte (7, 8) angebracht sind, die in Richtung (25) der Schleiferbahn (1) gegeneinander versetzt angeordnet sind.

5. Potentiometer nach Anspruch 4, **dadurch gekennzeichnet, daß** die mindestens zwei Abgriffkontakte (7, 8) längs einer gemeinsamen Achse (9) in einem Abstand (VA) zueinander angeordnet sind.

6. Potentiometer nach Anspruch 5, **dadurch gekennzeichnet, daß** der Versatz (BN) der beiden Abgriffkontakte (7, 8) in Längsrichtung (25) der Schleiferbahn (1) größer ist als der Abstand (3) benachbarter Stege (2), jedoch kleiner als die Summe aus dem Abstand (BL) benachbarter Stege und der Breite (BS) eines Steges.

7. Potentiometer nach Anspruch 5, **dadurch gekennzeichnet, daß** die Abgriffkontakte (7, 8) an parallelen Federarmen (5, 6) der Schleiferfeder angebracht, vorzugsweise angeschweißt oder angelötet sind.

8. Potentiometer nach Anspruch 7, **dadurch gekennzeichnet, daß** die Abgriffkontakte (7, 8) rechtwinklig zu ihrer Längsachse (9) verlaufende Stirnseiten haben.

9. Potentiometer nach Anspruch 7, **dadurch gekennzeichnet, daß** die Abgriffkontakte (7, 8) unter einem stumpfen Winkel (90° - α) zu ihrer Längsachse (9) verlaufende Stirnkanten haben.

10. Potentiometer nach einem der Ansprüche 1 bis 9, **dadurch gekennzeichnet,**
**daß** das Potentiometer zwei Schleiferbahnen (1, 11) aufweist und jede Schleiferbahn mindestens einen Abgriffkontakt gemäß einem der Ansprüche 2 bis 9 aufweist.

11. Potentiometer nach Anspruch 10, **dadurch gekennzeichnet, daß** für jede Schleiferbahn (1, 11) zwei Abgriffkontakte (7, 8; 14, 15) vorgesehen sind.

12. Potentiometer nach Anspruch 11, **dadurch gekennzeichnet, daß** alle Abgriffkontakte längs einer gemeinsamen Achse (9) ausgerichtet sind, die unter einem spitzen Winkel (α) gegenüber der Längsachse (10) der Schleiferfeder (4) angeordnet ist.

13. Potentiometer nach Anspruch 11, **dadurch gekennzeichnet, daß** die Abgriffkontakte (7, 8; 14, 15) längs zweier parallel zueinander versetzt angeordneter Achsen (9, 16) angeordnet sind.
